# DEMANDE DE BREVET EUROPEEN

(11) **EP 0 685 351 A1**
(43) Date de publication de la demande: **06.12.1995**
(21) Numéro de dépôt: 94470016.0
(22) Date de dépôt: 03.06.1994
(51) Int. Cl.: B60B 33/04

(54) **Suspension intégrée au moyeu d'une roue pour véhicules légers**

(71) Demandeur: AUBERT SA, F-68700 Cernay (FR)
(72) Inventeur: Eiler, Conrad, F-68130 Altkirch (FR)
(74) Mandataire: Poupon, Michel

(57) **Abrégé**

L'invention concerne un dispositif pour la suspension d'une roue de véhicule à vitesse lente et de faible poids comme par exemple les poussettes ou voitures d'enfants, caractérisé en ce qu'il est intégré au moyeu (4) de la roue.

Plus particulièrement le moyeu de la roue comporte un logement central (10) disposé selon l'axe de symétrie du moyeu et recevant un ressort de suspension (13) et un manchon de compression (11) mobile par rapport audit logement.

## Description

La présente invention concerne un dispositif pour la suspension de véhicules de vitesse lente et de faible poids comme par exemple les poussettes ou les voitures d'enfants et plus particulièrement aux poussettes dites "poussettes-canes".

L'invention s'applique en particulier mais non limitativement aux poussettes dites "poussettes cannes" qui comportent des roues simples ou jumelées et un siège supporté par un chassis tubulaire pliant.

Les suspensions connues à ce jour pour ce type de poussette sont des systèmes à ressort comprimé dans un manchon et interposés entre l'axe de rotation de la roue et une barre du chassis.

L'invention vise à simplifier ces systèmes pour diminuer le nombre de pièces et la durée du montage.

L'originalité de l'invention réside dans le fait que le ressort de suspension est intégré dans le moyeu de la roue qui assure alors plusieurs fonctions : la suspension, le guidage en rotation de la roue, la liaison avec le chassis.

Plus particulièrement l'invention consiste en un dispositif pour la suspension d'une roue de véhicules de vitesse lente et de faible poids, par exemple les poussettes ou voitures d'enfants caractérisé en ce qu'il est intégré au moyeu de la roue.

De façon préférentielle le moyeu de la roue comporte un logement central disposé selon l'axe de symétrie du moyeu et recevant un ressort de suspension et un manchon de compression mobile par rapport audit logement.

On comprendra mieux l'invention à l'aide de la description ci-après faite en référence aux figures annexées suivantes :
- la figure 1 est une vue de face d'une roue équipée selon l'invention,
- la figure 2 est une vue en coupe selon AA de la roue de la figure 1,
- la figure 3 est une vue en coupe selon BB du moyen de la figure 2.

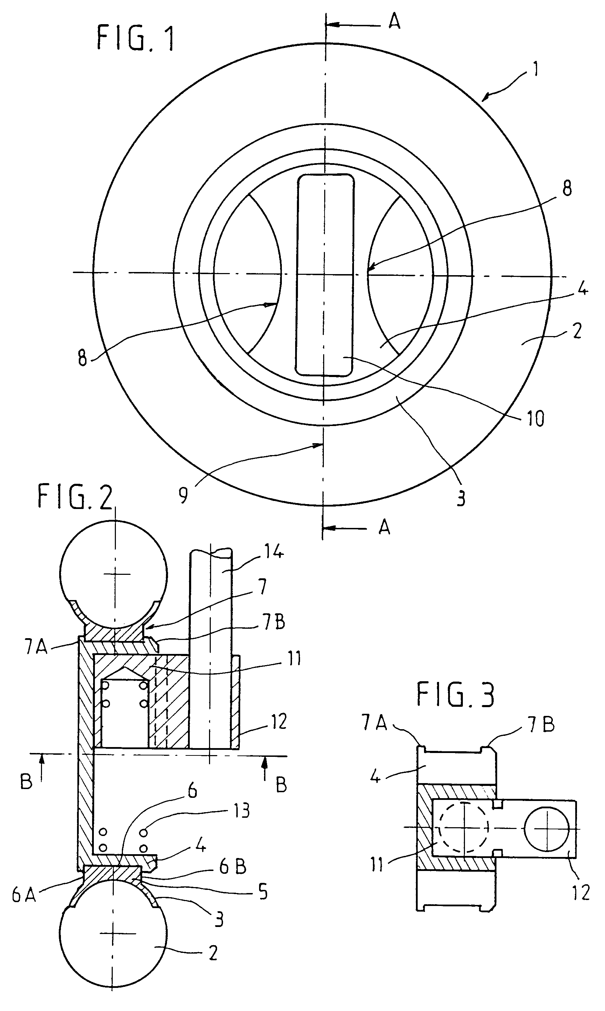

On se référera d'abord à la figure 1 qui représente une roue (1) équipée du dispositif de suspension selon l'invention.

La roue (1) comporte un pneu (2) monté sur une jante circulaire (3) prolongée par un moyen de guidage annulaire (5).

Le moyen de guidage (5) est ici une piste circulaire lisse avec deux ailes latérales (6A, 6B) la reliant à la jante (3).

A l'intérieur de la jante est monté à rotation un moyeu (4) avec une rainure circulaire externe (7) autour de laquelle coulisse le moyen de guidage (5), la piste lisse s'appuyant sur le fond de la rainure (7) dont les prolongements latéraux (7A,7B) servent de butées pour les deux ailes (6A,6B).

De préférence pour alléger le système, le moyeu (4) est en forme de disque plat avec deux découpes (8) en arc de cercle disposées symétriquement par rapport à l'axe de symétrie (9) vertical du moyeu.

Le moyeu (4) comporte encore un évidement ou logement central dans la direction de l'axe (9), pour recevoir un ressort de suspension (13) et un manchon (11) de compression du ressort. Le manchon (11) enveloppe de préférence mais non limitativement la partie supérieure du ressort et il est apte à coulisser dans le logement central (10).

Le manchon (11) est solidaire d'une patte (12) solidarisée par tout moyen approprié à une barre (13) d'un chassis non représenté. En option on peut fermer le logement (10) par un capot de protection non représenté.

Le mode de réalisation décrit n'est pas limitatif et l'invention peut présenter des variantes de réalisation. On peut par exemple remplacer l'ensemble - moyen de guidage (5), rainure (7) - par des moyens inverses et/ou équivalents. On peut également prévoir des billes de roulement.

L'invention peut en outre s'appliquer aussi bien aux roues simples qu'aux roues jumelées qui peuvent travailler dans des sens verticaux différents indépendamment l'une de l'autre.

Ses avantages sont nombreux et notamment : montage simple, absence de roulement, nombre de pièces réduit, adaptation facile d'un dispositif de freinage par exemple un frein à excentrique monté sur le moyen de guidage (5) avec une commande à distance de l'axe de rotation de l'excentrique.

## Revendications

1. Dispositif pour la suspension d'une roue de véhicule à vitesse lente et de faible poids comme par exemple les poussettes ou voitures d'enfants, caractérisé en ce qu'il est intégré au moyeu (4) de la roue.

2. Dispositif selon la revendication 1, caractérisé en ce que le moyeu de la roue comporte un logement central (10) disposé selon l'axe de symétrie du moyeu et recevant un ressort de suspension (13) et un manchon de compression (11) mobile par rapport audit logement.

3. Dispositif selon la revendication 2, caractérisé en ce que le manchon est solidarisé à une barre (13) du chassis de poussette par une patte (10).

4. Dispositif selon l'une des revendications précédentes, caractérisé en ce que la jante (3) comporte un moyen de guidage (5) pour coopérer en rotation avec une rainure (7) du moyeu.

5. Dispositif selon la revendication précédente, caractérisé en ce que le moyen de guidage (5) est une piste lisse circulaire avec ailes latérales (6A, 6B).

6. Dispositif selon l'une des revendications précédentes, caractérisé en ce que le moyeu (4) est en forme de disque plat avec deux découpes (8) en arc de cercle disposées symétriquement par rapport à l'axe de symétrie (9) du moyeu.

7. Dispositif selon l'une des revendications précédentes caractérisé en ce qu'il comporte en outre un dispositif de freinage comportant un frein à excentrique monté sur le moyen de guidage (5) et une commande à distance de l'axe de rotation de l'excentrique.
